# NEUE EUROPÄISCHE PATENTSCHRIFT

(11) **EP 2 313 637 B2**
(45) Veröffentlichungstag und Bekanntmachung des Hinweises auf die Entscheidung über den Einspruch: **20.08.2025**
(45) Hinweis auf die Patenterteilung: 07.03.2018
(21) Anmeldenummer: 09761728.6
(22) Anmeldetag: 10.06.2009
(51) Int. Cl.: B01D 46/00, B01D 46/10, B01D 46/42, B01D 46/52, F02M 35/02, F02M 35/024

(54) **FILTEREINRICHTUNG ZUR FILTRATION GASFÖRMIGER FLUIDE**
FILTER UNIT FOR FILTERING GASEOUS FLUIDS
DISPOSITIF DE FILTRATION DESTINÉ À FILTRER DES FLUIDES GAZEUX

(30) Priorität: 11.06.2008 DE 102008027847; 16.02.2009 DE 102009009066
(43) Veröffentlichungstag der Anmeldung: 27.04.2011
(60) Teilanmeldung: 18160176.6
(73) Patentinhaber: MANN+HUMMEL GmbH, 71636 Ludwigsburg (DE)
(72) Erfinder: JESSBERGER, Thomas, 71679 Asperg (DE); METZGER, Michael, 71334 Waiblingen (DE); SUDERMANN, Arthur, 71711 Steinheim (DE); GÖRG, Günter, 71696 Möglingen (DE); SCHMID, Björn, 70469 Stuttgart (DE); PFEIFFER, Frank, 71297 Mönsheim (DE); HANSELMANN, Markus, 74348 Lauffen (DE); Maier Jörg, 74357 Bönnigheim (DE)
(74) Vertreter: Maiwald GmbH
(86) Internationale Anmeldenummer: PCT/EP2009/057138
(87) Internationale Veröffentlichungsnummer: WO 2009/150165

(56) Entgegenhaltungen:
- EP-A2- 0 982 062
- DE-U1- 20 011 003
- US-A- 5 640 937
- US-A- 5 730 768
- US-A- 5 888 442

## Beschreibung

### Technisches Gebiet

Die Erfindung bezieht sich auf eine Filtereinrichtung zur Filtration gasförmiger Fluide, insbesondere auf Luftfilter in Kraftfahrzeugen, nach dem Oberbegriff des Anspruches 1 und auf einen Filtereinsatz, einsetzbar in der erfindungsgemäßen Filtereinrichtung.

### Stand der Technik

Aus der DE 196 38 790 A1 ist ein Ansaugluftfilter für eine Brennkraftmaschine bekannt, der ein Filtereinsatzteil mit einem Filterelement umfasst, das in ein Filtergehäuse einsetzbar ist. Das Filtergehäuse besteht aus einem Gehäusegrundkörper und einem öffenbaren Deckel, der schwenkbar am Gehäusegrundkörper gelagert ist. Das Filterelement des Filtereinsatzteiles ist von einem Rahmen eingefasst, an dem ein umlaufendes Dichtungselement zur strömungsdichten Separierung der Roh- von der Reinseite angeordnet ist. Im eingesetzten Zustand wird das Dichtungselement axial gegen einen gehäusefesten Steg gepresst, wobei zugleich der Rahmen an dem Filterelement das Dichtungselement radial nach außen, also quer zur Achsrichtung abstützt. Da die Dichtwirkung jedoch durch die axiale Verpressung des Dichtungselementes erreicht wird, muss die Reaktionskraft in Achsrichtung von dem Gehäuse aufgenommen werden, wofür eine entsprechende Auslegung von Verschlusselementen zur Sicherung der Gehäuseteile aneinander erforderlich ist.

Aus der US 4,725,296 ist ein Filtereinsatzteil für einen Luftfilter bekannt, bestehend aus einem zickzackförmig gefalteten Papier, das im äußeren Bereich mit einem Dichtungsrahmen versehen ist. Der Dichtungsrahmen besitzt eine umlaufende Dichtungsstruktur aus einem verformbaren Material und ist zwischen zwei Gehäusehälften eingespannt. Das Luftfiltereinsatzteil wird axial abgedichtet, wobei die Dichtungskraft von einem Verschlusssystem für die beiden Gehäuseteile erzeugt wird.

Weiterhin ist aus der EP 0 863 785 B1 ein Filterelement bekannt, welches ebenfalls aus einem gefalteten Filtermedium in Form einer ebenen Platte besteht. Zur Stabilisierung des Filterelementes sind quer über die Platte verlaufende Stege angeordnet, welche jeweils ein Schwertsegment aufweisen.

Die EP 0 982 062 A2 zeigt eine Filtereinrichtung, umfassend ein zweiteiliges Gehäuse und ein zwischen den Gehäuseteilen eingelegtes, gefaltetes Filterelement, wobei das Filterelement ein umlaufendes Dichtungselement aufweist, das in Montagerichtung der Gehäuseteile zwischen den Gehäuseteilen verpresst wird. Eine Einkerbung in dem Dichtungselement und eine korrespondierende Erhebung in einem Gehäuseteil erleichtert die Positionierung und Montage des Filterelementes im Gehäuse.

Die US 5 888 442 A zeigt ein Filterelement aus Vlies mit einem angeformten Flanschbereich, der zwischen zwei Gehäuseteilen in Montagerichtung der zwei Gehäuseteile verpresst wird.

Der DE 200 11 003 U1 ist ein Fluidabscheider zu entnehmen mit einem Behälter, der mit einem Deckel verschlossen wird und einem darin angeordnetem austauschbaren Filterelement.

Eine Dichtung mit ringförmiger Dichtfläche dichtet den Fluidabscheider zwischen Behälter und Deckel ab.

Der Erfindung liegt die Aufgabe zugrunde, mit einfachen konstruktiven Maßnahmen eine Filtereinrichtung zur Filtration gasförmiger Fluide zu schaffen, mit der eine zuverlässige Abdichtung unter Vermeidung hoher Spannkräfte bewirkt wird.

### Offenbarung der Erfindung

Diese Aufgabe wird erfindungsgemäß mit den Merkmalen des unabhängigen Anspruchs gelöst. Die abhängigen Ansprüche geben zweckmäßige Weiterbildungen an.

Die erfindungsgemäße Filtereinrichtung zur Filtration gasförmiger Fluide, bei der es sich insbesondere um Luftfilter für Kraftfahrzeuge handelt, weist ein Filtereinsatzteil mit einem Filtermedium und einem Dichtungselement auf, das in ein Filtergehäuse einsetzbar ist, wobei das Filtergehäuse mindestens zwei zusammensetzbare Gehäuseteile umfasst, zwischen denen das Dichtungselement festgeklemmt ist. Die Gehäuseteile sind hierfür mit Dichtstegen versehen, an denen das Dichtungselement abgestützt ist.

In der Erfindung sind die Dichtstege einander gegenüberliegend angeordnet, wobei die Klemmkraft, welche von den gegenüberliegenden Dichtstegen abgestützt ist und die auf das Dichtungselement wirkt, zumindest annähernd orthogonal zur Montagerichtung der Gehäuseteile verläuft. Diese Konfiguration hat den Vorteil, dass die Dichtung zumindest im Wesentlichen radial verspannt wird, wobei die Reaktionskraft ebenfalls in Radialrichtung liegt und aufgrund der zumindest annähernd orthogonalen Ausrichtung zur Montagerichtung keinen lösenden, die Gehäuseteile voneinander trennenden Effekt bewirkt, so dass auch Verschlusseinrichtungen, die zwischen den Gehäuseteilen vorgesehen sind, von den Dichtkräften entlastet sind. Dementsprechend können derartige Verschlusseinrichtungen geringer dimensioniert oder konstruktiv einfacher aufgebaut sein oder gegebenenfalls auch ganz entfallen, ohne dass der Zusammenhalt zwischen den Gehäuseteilen hierdurch signifikant beeinträchtigt wird. Die Reaktionskraft, die der auf das Dichtungselement wirkenden Klemmkraft entgegengesetzt ist, wird von der Gehäusewandung der Gehäuseteile aufgenommen. Die radiale Verpressung des Dichtungselementes gewährleistet eine ausreichende Abdichtung zwischen Roh- und Reinseite des Filtereinsatzteils.

Zweckmäßigerweise handelt es sich bei dem Filtermedium des Filtereinsatzteils um ein zickzackförmig gefaltetes, als Platte angeordnetes Filterpapier, das vorteilhafterweise von einem umlaufenden Rahmen eingefasst ist, welcher Träger des Dichtungselementes ist. Das Dichtungselement läuft am Filtermedium um und ist am Rahmen oder gegebenenfalls auch unmittelbar am Filtermedium angespritzt.

Die Montagerichtung, die üblicherweise in der Längsachse des Filtergehäuses liegt, fällt vorteilhafterweise mit der Durchströmrichtung des zu reinigenden Fluids durch das Filtermedium zusammen.

Die Dichtstege sind einander in Querrichtung gegenüberliegend angeordnet und begrenzen entsprechend an gegenüberliegenden Seiten das zwischenliegende Dichtungselement, welches von beiden Dichtstegen mit einer Klemmkraft beaufschlagt wird. Die Klemmkraft liegt quer zur Montage- bzw. Achsrichtung und wird über die Dichtstege weiter auf das jeweilige Gehäuseteil übertragen. Die Wirklinie der Klemmkraft liegt zumindest annähernd orthogonal zur Montage- bzw. Achsrichtung. Grundsätzlich kann die Wirklinie der Klemmkraft aber auch mit der Orthogonalen zur Montage- bzw. Längsrichtung des Filtergehäuses einen Winkel einschließen, beispielsweise einen Winkel von bis zu 30°. Bei einer derartigen winkligen Anordnung kann zumindest eine Kontaktfläche an einem der Dichtstege, die das Dichtungselement beaufschlagen mit einer entsprechenden Winkelneigung versehen sein, wodurch das axiale Zusammenfügen während des Montageprozesses erleichtert wird. Aufgrund der winkligen Ausrichtung kann zwar eine verhältnismäßig kleine Reaktionskraft in Achsrichtung entstehen, die jedoch ohne Weiteres von bestehenden Verschlusseinrichtungen aufgenommen werden kann.

Die Kontaktflächen sind vorzugsweise eben ausgeführt, wobei grundsätzlich im Rahmen der Erfindung auch nicht-ebene Kontaktflächen, beispielsweise gewölbte Kontaktflächen, in Betracht kommen. Bei ebenen Kontaktflächen können diese im Bereich des Kontaktes zu beiden Dichtstegen eine parallele Ausrichtung zueinander aufweisen.

Im montierten Zustand liegt das Dichtungselement an den Kontaktflächen der beiden Dichtstege an, wobei aufgrund der Verpressung die jeweilige außen liegende Dichtfläche am Dichtungselement geradflächig oder komplementär zur jeweiligen Kontaktfläche am Dichtsteg geformt ist. Dadurch entstehen gegenüberliegende Dichtflächen an dem Dichtungselement, von denen eine Dichtfläche dem Filtermedium zugewandt und die zweite Dichtfläche dem Filtermedium abgewandt ist. Die Wirklinie der Presskraft zwischen den Dichtflächen verläuft aufgrund der Kraftbeaufschlagung über die Kontaktflächen an den Dichtstegen in vorbeschriebener Weise orthogonal zur Montage- bzw. Längsachse bzw. unter einem Winkel zu dieser Orthogonalen.

Das Dichtungselement ist unmittelbar an das Filtermedium oder an einen das Filtermedium umschließenden Rahmen angespritzt bzw. angeschäumt und beispielsweise als PUR-Schaumdichtung ausgeführt sein. Das Dichtungselement erstreckt sich zumindest teilweise in Radialrichtung über die Anström- bzw. Abströmfläche des Filtermediums hinaus, wobei der radial überstehende Teil der Schaumdichtung zweckmäßigerweise in einem Aufnahmeraum liegt, der direkt oder indirekt von den Dichtstegen begrenzt ist. Grundsätzlich möglich ist aber auch eine Kraftbeaufschlagung des Dichtungselementes von den Dichtstegen innerhalb der Kontur der Anström- bzw. Abströmfläche des Filtermediums.

Der Aufnahmeraum, in den das Dichtungselement in montierter Lage einragt, ist gemäß einer zweckmäßigen Weiterbildung auf der dem Filtermedium zugewandten Seite von einem Dichtsteg und auf der dem Filtermedium abgewandten Seite von einem Stützsteg begrenzt, wobei der Dichtsteg und der Stützsteg einteilig mit dem gleichen Gehäuseteil ausgebildet sind. Der zweite Dichtsteg ragt in montierter Position in den Aufnahmeraum ein und ist insbesondere an der Innenwand des Stützstegs abgestützt. Der Stützsteg und/oder der unmittelbar benachbarte Dichtsteg können hierbei eine abgeschrägte Führungsfläche aufweisen, die gegenüber einer Parallelen zur Montage- bzw. Längsrichtung einen Winkel von beispielsweise nicht mehr als 30° aufweist, um das axiale Einführen des Dichtstegs gegen den Widerstand des im Aufnahmeraum befindlichen Dichtungselement zu erleichtern.

Gemäß einer weiteren zweckmäßigen Ausführung ist vorgesehen, dass der Aufnahmeraum zur Aufnahme des Dichtungselementes unmittelbar von den beiden Dichtstegen begrenzt ist. In dieser Konfiguration kann grundsätzlich auf einen Stützsteg, welcher einteilig mit dem dem Filtermedium unmittelbar benachbarten Dichtsteg ausgebildet ist, verzichtet werden.

Des Weiteren ist es auch möglich, den Aufnahmeraum von einem der Dichtstege sowie dem Stützsteg begrenzen zu lassen, wobei Dichtsteg und Stützsteg einteilig ausgeführt sind. Die radiale Presskraft auf das Dichtungselement wird mithilfe des zweiten Dichtsteges erzeugt, das auf der Außenseite des Stützstegs zur Anlage gelangt und diesen radial nach innen gegen das Dichtungselement kraftbeaufschlagt.

Gemäß noch einer weiteren zweckmäßigen Ausführung ist vorgesehen, dass das Dichtungselement den dem Filtermedium unmittelbar zugewandten Dichtsteg übergreift. Dieser wird insbesondere mithilfe einer biegsamen Dichtlippe bewirkt, die Teil des Dichtungselementes ist und im montierten Zustand über den dem Filtermedium zugewandten Dichtsteg gelegt ist. Vor der Montage kann diese Dichtlippe seitlich bzw. radial abstehen. Mit dem axialen Heranführen des zweiten Gehäuseteils wird die überstehende Dichtlippe in den Aufnahmeraum hineingedrückt, wobei sich während dieser Montagebewegung die Dichtlippe um den ersten, dem Filtermedium zugewandten Dichtsteg legt.

Um sicherzustellen, dass das Dichtungselement im montierten bzw. zusammengefügten Zustand der Gehäuseteile zumindest im Wesentlichen eine radiale Presskraft und keine oder nur eine geringe axiale Presskraft erfährt, kann es zweckmäßig sein, an einem Gehäuseteil einen Anschlag zur Begrenzung der Montagerichtung vorzusehen, der in endgültiger, montierter Position in Anlage mit dem anderen Gehäuseteil steht. Der Anschlag begrenzt das Zusammenfügen der Gehäuseteile in Achsrichtung, so dass gewährleistet werden kann, dass das Dichtungselement in Achsrichtung nicht oder nur mit einer geringen Presskraft beaufschlagt wird.

Ferner kann ein zusätzlicher Dichtkörper zwischen einem Gehäuseteil und dem Dichtungselement vorgesehen sein, wobei der zusätzliche Dichtkörper bezogen auf die Kontaktfläche zwischen dem dem Filtermedium abgewandten Dichtsteg und dem Dichtungselement zur Reinseite des Filtermediums versetzt ist. Der zusätzliche Dichtkörper stellt eine zusätzliche Kontaktstelle zwischen dem Gehäuseteil und dem Dichtungselement dar, wobei aufgrund der Positionierung des Dichtkörpers versetzt zur Reinseite des Filtermediums auch die Sicherheit gegen ein versehentliches Verschmutzen der Reinseite während des Austauschens des Filtereinsatzteils gegeben ist.

Ferner kann ein Dichtsteg an einem Gehäuseteil und ein Dicht- oder Stützsteg am anderen Gehäuseteil nach Art einer Nut-Feder-Verbindung formschlüssig ineinander greifen. Der Dichtsteg ist beispielsweise als U-förmige Gehäusestruktur ausgebildet und nimmt im montierten Zustand den Dicht- oder Stützsteg am anderen Gehäuseteil auf. Dadurch wird ein Formschluss in Quer- bzw. Radialrichtung erzielt, was in dieser Richtung mit einer Selbstzentrierung einhergeht. Dies hat den Vorteil, dass bei der Herstellung der Gehäuseteile mit größeren Toleranzen gearbeitet werden kann, so dass beispielsweise eine Bombierung einer Seitenwandung eines der Gehäuseteile ohne Einschränkung der Funktionstüchtigkeit zugelassen werden kann. Derartige Bombierungen entstehen beispielsweise durch Verzug, Schrumpfung oder dergleichen bei der Herstellung. Über den Formschlusseingriff nach Nut-Feder-Art können derartige Toleranzen ausgeglichen werden. Über einen keilförmigen Verlauf des Dichtstegs, welcher Teil der U-förmigen Gehäusestruktur ist, kann die axiale Montage in einfacher Weise durchgeführt und hierbei in Radialrichtung eine hohe Presskraft auf das Dichtungselement erzeugt werden. Grundsätzlich kommt aber auch eine geradflächige Ausführung des Dichtstegs mit parallel mit Montagerichtung ausgeführter Kontaktfläche in Betracht.

Eine Nut-Feder-Verbindung wird bereits dadurch hergestellt, dass der Dichtsteg in den Aufnahmeraum eingreift, der von dem zweiten Dichtsteg und Stützsteg begrenzt ist. Auch in dieser Ausführung wird eine Selbstzentrierung während der Montage erzielt, zudem kann auf die aufwändigere, U-förmige Gehäusestruktur am Gehäuseteil, das dem Aufnahmeraum gegenüberliegt, verzichtet werden.

Ferner kann mindestens ein Dichtsteg von einem Schnapphaken übergriffen sein, der einteilig mit einem Gehäuseteil ausgebildet und in eine Schnappverbindung mit dem anderen Gehäuseteil zu erbringen ist. Der Schnapphaken übergreift zweckmäßigerweise beide Dichtstege und befindet sich somit an der radialen Außenseite des Filtergehäuses. Auch diese Ausführung wird zweckmäßigerweise mit der radialen Verpressbarkeit des Dichtungselementes kombiniert.

Die Schnappverbindung kann zusätzlich zu dem Schnapphaken, der in eine Schnappverbindung mit dem anderen Gehäuseteil zu verbringen ist, ein zweites Zentrierelement bzw. einen Zentrierpin aufweisen, der zusätzlich zum Schnapphaken vorgesehen ist. Der Zentrierpin bewirkt eine Zentrierung insbesondere in Umfangsrichtung und/oder in Radialrichtung zwischen den Gehäuseteilen. Außerdem kann mithilfe des Pins eine ergänzende Schnappverbindung realisiert werden, wodurch die Sicherheit gegen versehentliches Lösen erhöht ist.

Auch die Ausführung mit der Schnappverbindung wird zweckmäßigerweise mit der radialen Verpressbarkeit des Dichtungselementes kombiniert.

### Kurze Beschreibung der Zeichnungen

Weitere Vorteile und zweckmäßige Ausführungen sind den weiteren Ansprüchen, der Figurenbeschreibung und den Zeichnungen zu entnehmen.

Es zeigen:
Fig. 1 ein Filtereinsatzteil für einen Luftfilter in einer Schnittdarstellung,
Fig. 2 einen Luftfilter mit einem Gehäuseoberteil und einem Gehäuseunterteil und einem im Gehäuse aufgenommenen Filtereinsatzteil,
Fig. 3 einen Schnitt durch den Randbereich des Filterelementes, mit einem am Filtermedium angespritzten Dichtungselement, das in einen Aufnahmeraum einragt und radial von Dichtstegen an den Gehäuseteilen begrenzt ist,
Fig. 4 eine Ausführungsvariante,
Fig. 5 eine vergrößerte Darstellung der Ausführungsvariante nach Fig. 4,
Fig. 6 ein weiteres nicht erfindungsgemäßes Ausführungsbeispiel, mit einer Schnappverbindung zwischen den Gehäuseteilen,
Fig.7 ein weiteres Ausführungsbeispiel mit einer U-förmigen Gehäusestruktur an einem Gehäuseteil, in die ein Stützsteg am anderen Gehäuseteil einragt,
Fig. 8 ein weiteres Ausführungsbeispiel, bei dem zur Verbindung der Gehäuseteile ein Dom am unteren Gehäuseteil angeordnet ist, der mit einer Ausnehmung in einem Steg am oberen Gehäuseteil fluchtet,
Fig. 9 eine perspektivische Darstellung des Ausführungsbeispiels nach Fig. 8,
Fig. 10 ein weiteres nicht erfindungsgemäßes Ausführungsbeispiel, bei dem das Dichtungselement eine seitlich überragende Dichtlippe aufweist,
Fig. 11 das Ausführungsbeispiel gemäß Fig. 10 im montierten Zustand, bei dem die Dichtlippe umgebogen ist und einen Dichtsteg übergreift,
Fig. 12 einen Schnitt durch ein weiteres Ausführungsbeispiel mit einem zusätzlichen Dichtkörper zwischen dem oberen Gehäuseteil und dem Dichtungselement,
Fig. 13 in perspektivischer Ansicht ein weiteres nicht erfindungsgemäßes Ausführungsbeispiel mit einer Schnappverbindung an den Gehäuseteilen,
Fig. 14 ein nicht erfindungsgemäßes Ausführungsbeispiel im Schnitt mit einer Schnappverbindung.
In den Figuren sind gleiche Bauteile mit gleichen Bezugszeichen versehen.

### Ausführungsform(en) der Erfindung

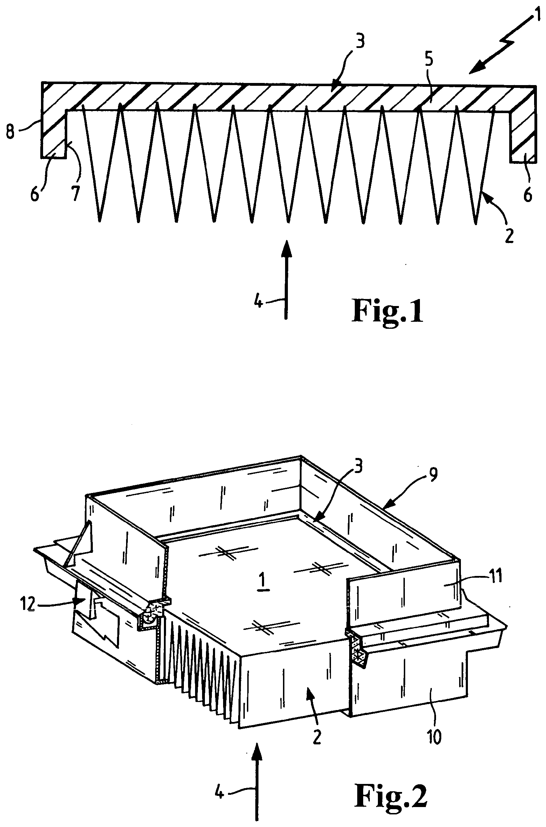

Das in Fig. 1 dargestellte Luftfiltereinsatzteil 1, das Bestandteil eines Luftfilters im Ansaugtrakt einer Brennkraftmaschine eines Kraftfahrzeuges ist, besteht aus einem zickzackförmig gefalteten, plattenförmig angeordneten Filtermedium 10, das aus einem Filterpapier besteht. Das gefaltete Filtermedium 2 nimmt die Form einer rechteckförmigen Platte ein und ist mit einem umfangsseitig umlaufenden Dichtungselement 3 versehen, welches im eingebauten Zustand des Filtereinsatzteils 1 die Rohseite von der Reinseite strömungsdicht separiert. Das Filtereinsatzteil 1 wird in Pfeilrichtung 4 von der zu reinigenden Ansaugluft durchströmt. Das Dichtungselement 3, das im Bereich der Reinseite des Filtermediums 2 angeordnet ist, besteht vorzugsweise aus Polyurethanschaum und wird nach dem Falten und Aufstellen des Filtermediums 2 an dieses angeschäumt bzw. angespritzt.

Das Dichtungselement 3 besteht aus einem am Außenumfang an der Reinseite des Filtermediums 2 angeordneten, umlaufenden Steg 5 und einer seitlich gegenüber dem Steg 5 nach unten ragenden Dichtzunge 6, die sich parallel zur Durchströmrichtung 4 erstreckt. Die umlaufende Dichtzunge 6 weist eine innen liegende, dem Filtermedium 2 zugewandte Dichtfläche 7 und eine außen liegende, dem Filtermedium 2 abgewandte Dichtfläche 8 auf, wobei die Dichtflächen 7 und 8 des Dichtungselementes 3 im montierten Zustand an Dichtstegen des Filtergehäuses dichtend anliegen. Die Dichtzunge 6 nimmt hierbei die Dicht- bzw. Klemmkraft auf, die orthogonal zur Durchströmrichtung 4 gerichtet ist. Die Durchströmrichtung 4 verläuft parallel zur Gehäuselängsachse.

In Fig. 2 ist ein Luftfilter dargestellt, bestehend aus einem zweiteiligen Filtergehäuse 9 und dem in das Filtergehäuse eingesetzten Filtereinsatzteil 1. Das Filtergehäuse 9 weist zwei Gehäuseteile 10 und 11 auf, die lösbar miteinander verbunden sind. Das untere Gehäuseteil 10 und das obere Gehäuseteil 11, beispielsweise ein Gehäusedeckel, sind über lösbare Verbindungseinrichtung aneinander gekoppelt, die als Rastverbinder 12 ausgeführt sind. Die Richtung, in der die beiden Gehäuseteile 10 und 11 aneinander montiert werden, verläuft koaxial zur Durchströmrichtung 4 des Fluids durch das Filtereinsatzteil 1 bzw. zur Gehäuselängsachse. Zur Demontage der Gehäuseteile 10 und 11 werden diese entsprechend entlang der Gehäuselängsachse voneinander entfernt. Die Montagerichtung fällt somit wie die Durchströmrichtung mit der Längsachse des Gehäuses zusammen.

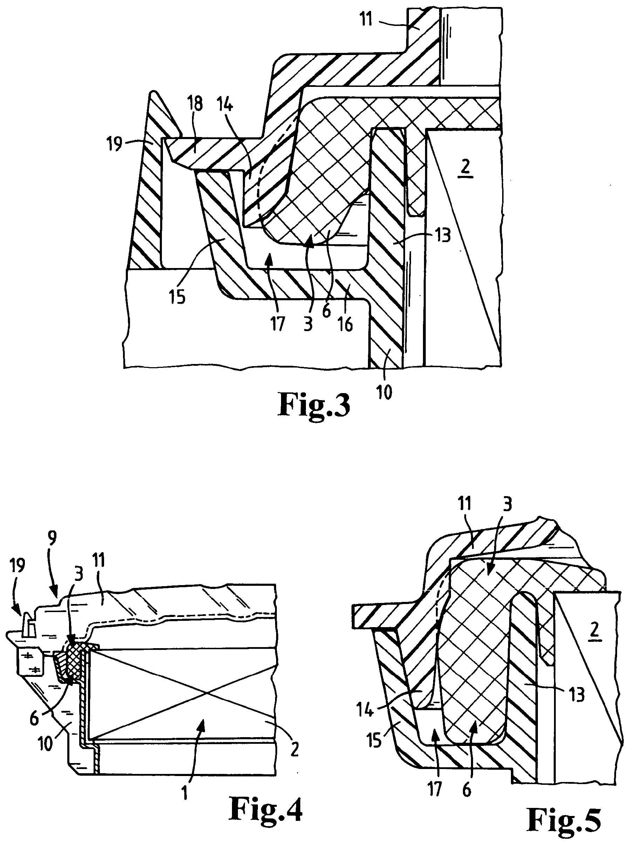

In Fig. 3 ist die Filtereinrichtung im zusammengesetzten Zustand dargestellt. Die Dichtzunge 6 des Dichtungselementes 3 ragt seitlich bzw. bezogen auf die Längsachse des Filtergehäuses radial über das Filtermedium 2 heraus und befindet sich in einem Aufnahmeraum 17, der einen annähernd U-förmigen Querschnitt aufweist und auf der dem Filtermedium 2 zugewandten Seite von einem einteilig mit dem unteren Gehäuseteil 10 ausgebildeten Dichtsteg 13 sowie auf der dem Filtermedium 2 abgewandten Seite von einem ebenfalls einteilig mit dem unteren Gehäuseteil 10 ausgebildeten Stützsteg 15 begrenzt ist. Der Stützsteg 15 ist über einen horizontal verlaufenden Verbindungsabschnitt 16 mit dem Dichtsteg 13 verbunden. Der Dichtsteg 13 besitzt eine parallel zur Gehäuselängsachse ausgerichtete Orientierung; die der Dichtzunge 6 zugewandte Seitenwand des Dichtstegs 13 bildet eine parallel zur Gehäuselängsachse verlaufende Kontaktfläche. Der Stützsteg 15 ist gegenüber der Gehäuselängsachse um einen Winkelbetrag von 10° bis 20° nach außen geneigt und bildet eine Gleitfläche für das axiale Einführen eines Stützstegs 14, der einteilig mit dem oberen Gehäuseteil 11 ausgebildet ist, wobei die der Dichtzunge 6 zugewandte Seitenwand des Dichtstegs 14 eine Kontaktfläche bildet. Im montierten Zustand ist die Dichtzunge 6 zwischen den Kontaktflächen an den Stützstegen 13 und 14 radial im Aufnahmeraum 17 eingeklemmt. Die Gleitfläche an der dem Aufnahmeraum 17 zugewandten Innenseite des Stützstegs 15 kann für ein erleichtertes axiales Einführen des Dichtstegs 14 am oberen Gehäuseteil 11 vorteilhaft ausgenutzt werden. Aufgrund der winkligen Ausrichtung des Stützstegs 15 weist der Aufnahmeraum 17 an seiner der Stirnseite des Stützstegs 15 benachbarten Oberseite eine größere Erstreckung in Radialrichtung auf als im Bereich des Bodens, der von dem Verbindungsabschnitt 16 gebildet wird. Dadurch ist ein leichteres Einführen des Dichtstegs 14 in den Aufnahmeraum 17 ermöglicht. Mit dem axialen Einführen des Dichtstegs 14 wird die mit strichlierter Linie dargestellte ursprüngliche Kontur der Dichtzunge 6 radial zusammengedrückt, bis die mit durchgezogenem Strich dargestellte Kontur der Dichtzunge 6 erreicht wird. Die Dicht- bzw. Presskraft ist in Radialrichtung ausgerichtet und liegt somit zumindest annähernd orthogonal zur Längsachse des Gehäuses, in die auch die Montagerichtung der beiden Gehäuseteile 10 und 11 fällt.

Der Dichtsteg 14 am oberen Gehäuseteil 11 weist eine bezogen auf den Stützsteg 15 am unteren Gehäuseteil 10 gegensinnige winklige Ausrichtung auf, so dass die Kontaktfläche auf der der Dichtzunge 6 zugewandten Innenseite des Dichtstegs 14 annähernd parallel zur Kontaktfläche am gegenüberliegenden Dichtsteg 13 liegt bzw. gegenüber einer Parallelen lediglich eine kleine Winkelabweichung von maximal 10° aufweist, wobei die Neigung entgegengesetzt gerichtet ist zur Neigung des Stützstegs 15.

Zur Begrenzung des axialen Einschubs des Dichtstegs 14 in den Aufnahmeraum 17 weist der Dichtsteg 14 einen radial auskragenden Anschlag 18 auf, der in montierter Position auf Kontakt zur freien Stirnseite des Stützstegs 15 am unteren Gehäuseteil 10 liegt. Die Dimensionierungen von dem Anschlag 18 sowie dem Dichtungselement 3 der Dichtzunge 6 und dem Aufnahmeraum 17 können hierbei so gewählt werden, dass die Oberseite des Dichtungselementes 3 im montierten Zustand ohne signifikante Kraftbeaufschlagung durch das obere Gehäuseteil 11 bleibt. Damit ist sichergestellt, dass die Dichtwirkung durch eine radiale Verpressung der Dichtzunge 6 erreicht wird, wobei die Press- bzw. Dichtkraft in Radialrichtung von den beiden Dichtstegen 13 und 14 aufgenommen wird.

Wie Fig. 3 des Weiteren zu entnehmen, sind die beiden Gehäuseteile 10 und 11 über eine Rast- bzw. Schnappverbindung in Achsrichtung formschlüssig miteinander verbunden. Hierfür ist am unteren Gehäuseteil 10 einteilig ein Schnapphaken 19 ausgebildet, der in montierter Lage den radial auskragenden Anschlag am oberen Gehäuseteil 11 nach Art einer Schnappverbindung übergreift. Der Schnapphaken 19 kann zum Lösen der Schnappverbindung radial nach außen gebogen werden, so weit, bis der Schnapphaken 19 den Anschlag 18 freigibt. In Radialrichtung bzw. Querrichtung gesehen liegt der Schnapphaken 19 an der Außenseite des Filtergehäuses, wobei der Schnapphaken 19 in Achsrichtung des Gehäuses gesehen die Dichtstege 13 und 14 sowie den Stützsteg 15 zumindest im Wesentlichen übergreift. Der Schnapphaken 19 befindet sich somit axial in gleicher Höhe wie die Stege 13 bis 15, so dass die von der Schnappverbindung ausgeübte Klemmkraft zwischen den Gehäuseteilen 10 und 11 ihre Klemmkraft axial in Höhe der Stege entfalten kann. Dadurch wird eine optimale Verpressung der Dichtzunge 6 im Aufnahmeraum 17 in Radialrichtung erreicht.

Auch im Ausführungsbeispiel gemäß den Fig. 4 und 5 liegt die Dichtzunge 6 des Dichtungselementes 3 im Aufnahmeraum 17 an, der auf Seiten des Filtermediums 2 von dem Dichtsteg 13 am unteren Gehäuseteil 10 und auf der dem Filtermedium 2 abgewandten Seite von dem Stützsteg 15 begrenzt ist. Unmittelbar an der Innenseite des Stützstegs 15, der einteilig mit dem unteren Gehäuseteil ausgebildet ist, liegt in montierter Position die Außenseite des weiteren Dichtstegs 14 an, der einteilig mit dem oberen Gehäuseteil 11 ausgeführt ist.

Die der Dichtzunge 6 zugewandte Kontaktfläche am Dichtsteg 14 ist als nicht-ebene Fläche ausgeführt, deren Kontur in Achsrichtung abwechselnd geringfügig konkav und konvex ausgebildet ist. Die Grundgeometrie des Dichtstegs 14 ist Keilform, was das axiale Einführen in den Aufnahmeraum 17 bei gleichzeitiger radialer Verpressung der Dichtzunge 6 erleichtert. Die nicht-ebene Kontur am Dichtsteg 14 ermöglicht es, die radiale Verpressung der Dichtzunge 6 in Achsrichtung in Zonen unterschiedlicher Abschnitte einzuteilen. Auf diese Weise kann gesteuert werden, wo der Abschnitt mit maximaler radialer Presskraft an der Dichtzunge 6 wirksam ist. Dies erfolgt beispielsweise axial etwa in der Mitte der Dichtzunge 6. Die Kontaktfläche am Dichtsteg kann auch zwei in sich ebene, jedoch zueinander winklig ausgerichtete Flächenabschnitte aufweisen.

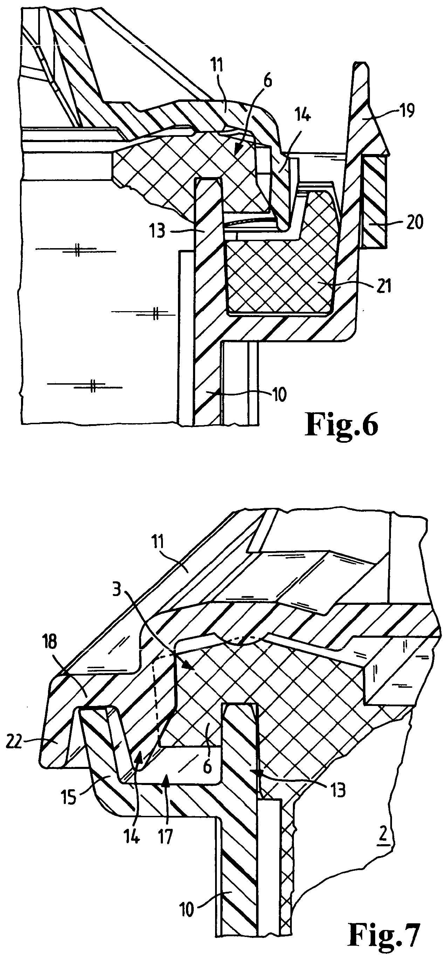

Im nicht erfindungsgemäßen Ausführungsbeispiel gemäß Fig. 6 ist die Dichtzunge 6 unmittelbar von den Dichtstegen 13 am unteren Gehäuseteil und 14 am oberen Gehäuseteil begrenzt und wird von den Dichtstegen mit einer radialen Klemm- bzw. Presskraft beaufschlagt. Der obere bzw. radial außen liegende Dichtsteg 14 stützt sich radial nach außen an einem weiteren Dichtungselement 21 ab, das axial unterhalb der Dichtzunge 6 angeordnet ist und radial nach innen ebenfalls von dem Dichtsteg 13 und radial nach außen von einem Schnapphaken 19 abgestützt ist. Der Schnapphaken 19 ist durch eine Ausnehmung im oberen Gehäuseteil geführt und stützt sich an einem Wandabschnitt 20 des oberen Gehäuseteils ab. Der Schnapphaken 19 ist einteilig mit dem unteren Gehäuseteil ausgeführt und definiert den Aufnahmeraum, in den das weitere Dichtungselement 21 eingesetzt ist und in den auch die Dichtzunge 6 einragt, welche über die freie Stirnseite des Dichtstegs 13 geführt ist.

Das Ausführungsbeispiel gemäß Fig. 7 entspricht im Wesentlichen denjenigen nach den Fig. 3 und 5, jedoch mit dem Unterschied, dass der Dichtsteg 14 an dem oberen Gehäuseteil 11 Bestandteil einer U-förmigen Gehäusestruktur ist, bei der der Dichtsteg 14 einen Schenkel, der horizontal verlaufende Abschnitt bzw. Anschlag 18 den Boden und ein weiterer Gehäuseabschnitt 22 den zweiten Schenkel bildet, der sich analog zum Dichtsteg 14 zumindest annähernd in Achsrichtung des Gehäuses erstreckt, jedoch ggf. mit der Achsrichtung einen kleinen Winkel einschließt. Die U-förmige Gehäusestruktur übergreift den Stützsteg 15 am unteren Gehäuseteil 10. Hierdurch wird eine Selbstzentrierung des oberen Gehäuseteils 11 bezogen auf das untere Gehäuseteil 10 während der Montage der Gehäuseteile erreicht, bei der die Gehäuseteile 10, 11 axial zusammengefügt werden. Der Dichtsteg 14 sowie der weitere Gehäuseabschnitt 22 sind jeweils geringfügig winklig nach außen ausgestellt, so dass der Innenraum der U-förmigen Gehäusestruktur die Geometrie eines sich nach außen öffnenden Trapezes aufweist, wodurch der Selbstzentrierungseffekt unterstützt und verbessert wird.

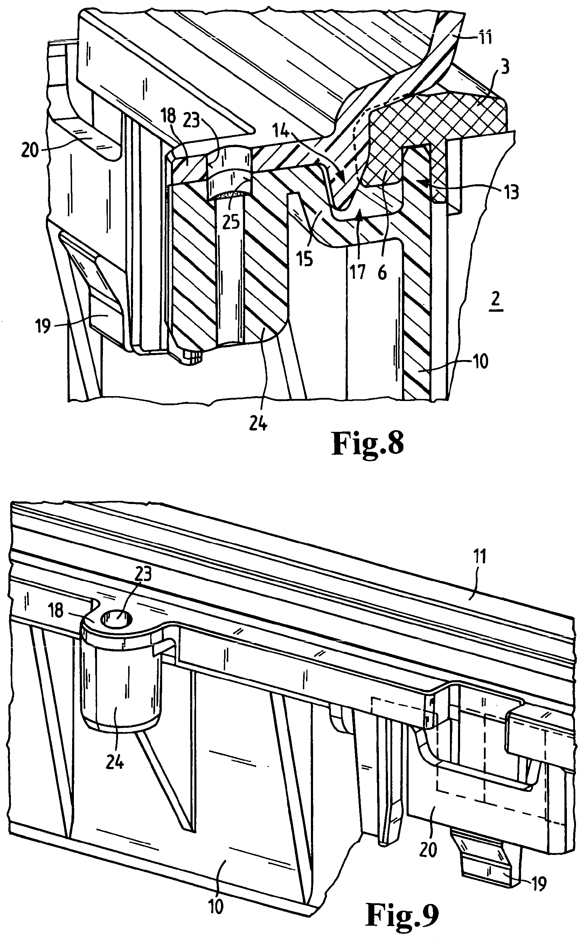

In dem in den Fig. 8 und 9 dargestellten Ausführungsbeispiel ist die Verbindungseinrichtung zwischen den Gehäuseteilen 10 und 11 dargestellt. Die Verbindungseinrichtung umfasst zum einen die Rast- bzw. Schnappverbindung, bestehend aus dem Schnapphaken 19 an einem Gehäuseteil, der einen Wandabschnitt 20 am anderen Gehäuseteil in Achsrichtung formschlüssig hintergreift, so dass ein axiales Lösen der Gehäuseteile voneinander verhindert ist. Im Ausführungsbeispiel ist der Schnapphaken 19 einteilig mit dem oberen Gehäuseteil 11 und der Wandabschnitt 20, der eine Ausnehmung zum Hindurchführen des Schnapphakens begrenzt, einteilig mit dem unteren Gehäuseteil 10 ausgebildet.

Die Verbindungseinrichtung umfasst des Weiteren eine Schraubverbindung bzw. eine ähnliche, kraft- bzw. formschlüssige Verbindung, bestehend aus einem laschenförmigen, sich in Radialrichtung erstreckenden Abschnitt bzw. Absatz 18, in den eine Ausnehmung 23 eingebracht ist, und einem am anderen Gehäuseteil ausgebildeten Dom 24 mit einer durchgehenden Ausnehmung bzw. Bohrung 25. Die Ausnehmungen 23 im Absatz 18 und 25 im Dom 24 befinden sich im montierten Zustand in einer miteinander fluchtenden Position, so dass eine Schraube oder ein ähnliches Verbindungselement durch die Ausnehmungen 23 und 25 hindurchgeführt werden kann. Die Achse durch die Ausnehmungen 23 und 25 liegt parallel zur Gehäuselängsachse. Der Absatz 18, welcher sich radial nach außen erstreckt und einteilig mit dem Dichtsteg 14 am oberen Gehäuseteil 11 ausgebildet ist, besitzt, wie insbesondere Fig. 9 zu entnehmen, eine etwa halbkreisförmige Geometrie. Auch der Dom 24, der radial außerhalb des Stützstegs 15 am unteren Gehäuseteil 10 ausgebildet ist, besitzt eine entsprechend halbkreisförmige Grundgeometrie. Die Verbindungseinrichtung mit dem laschenförmigen Absatz 18 und dem fluchtenden Dom 24 ist in unmittelbarer Nachbarschaft zur ersten Verbindungseinrichtung mit dem Schnapphaken 19 und dem Wandabschnitt 20 angeordnet.

Grundsätzlich reicht die Verbindung über den Schnapphaken 19 und den Wandabschnitt 20 für einen axialen und radialen Zusammenhalt zwischen den Gehäuseteilen 10 und 11 aus. Die weitere Verbindungseinrichtung mit dem laschenförmigen Absatz 18 und dem Dom 24 kann eine Not- bzw. Reparaturfunktion für den Fall übernehmen, dass die Schnappverbindung außer Kraft gesetzt ist, beispielsweise durch Materialversagen im Bereich des Schnapphakens 19.

Über die Dichtstege 13 und 14 erfolgt auch im Ausführungsbeispiel gemäß den Fig. 8 und 9 eine radiale Kraftbeaufschlagung der Dichtzunge 6 des Dichtungselementes 3.

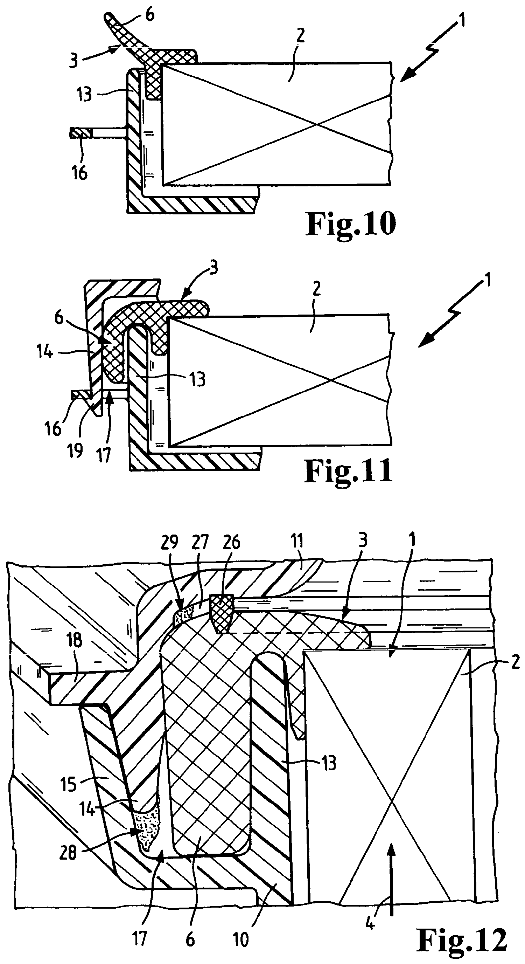

Im nicht erfindungsgemäßen Ausführungsbeispiel gemäß den Fig. 10 und 11 ist das Dichtungselement 3 mit einer Dichtzunge bzw. - lippe 6 versehen, die im unbelasteten Zustand (Fig. 10) seitlich übersteht und durch axiale Beaufschlagung über den Dichtsteg 14 so weit umgebogen wird, dass sich die Dichtlippe 6 um die freie Stirnseite des ersten Dichtstegs 13 legt und in den Aufnahmeraum 17 einragt (Fig. 11).

Wie Fig. 11 zu entnehmen, bildet der zweite Dichtsteg 14 zugleich einen Schnapphaken 19, der durch eine Ausnehmung im Abschnitt 16 geführt ist, welcher einteilig mit dem ersten Dichtsteg 13 ausgebildet ist. Der radial außen liegende Teil des Abschnittes 16 wird von dem Schnapphaken 19 formschlüssig hintergriffen. Dem Dichtsteg 14 kommt somit zusätzlich zur radialen Kraftbeaufschlagung der Dichtlippe 6 des Dichtungselementes 3 die Funktion eines Schnapphakens zu.

Der radial auskragende Abschnitt 16, der einteilig mit dem Dichtsteg 13 ausgebildet ist, wird im nicht erfindungsgemäßen Ausführungsbeispiel gemäß den Fig. 10 und 11 für die Schnappverbindung zwischen den Gehäuseteilen benötigt. Im Hinblick auf den Aufnahmeraum 17, in den im montierten Zustand die Dichtlippe 6 einragt, ist der radiale Verbindungsabschnitt 16 nicht zwingend erforderlich; der Aufnahmeraum 17 kann grundsätzlich axial in beide Richtungen offen sein, da eine radiale Begrenzung über die Dichtstege 13 und 14 ausreicht, um eine Verpressung des Dichtungselements zu erreichen.

Auch im Ausführungsbeispiel gemäß Fig. 12 wird die Dichtzunge 6 des Dichtungselementes 3, die in den Aufnahmeraum 17 einragt, mit einer radialen Klemm- bzw. Presskraft beaufschlagt, die zwischen den Dichtstegen 13 und 14 wirksam ist. Der Anschlag 18, der einteilig mit dem Dichtsteg 14 ausgebildet ist, liegt auf der freien Stirnseite des den Aufnahmeraum 17 radial nach außen begrenzenden Stützstegs 15 auf. Die freie Stirnseite des in den Aufnahmeraum 17 einragenden Dichtstegs 14 liegt auf Abstand zum Boden des Aufnahmeraums, so dass sich in dem zwischenliegenden Bereich Schmutzteilchen 28 ansammeln können.

Des Weiteren ist ein zusätzlicher Dichtkörper 26 zwischen dem Dichtungselement 3 und einem Abschnitt des Gehäuseteils 11 vorgesehen. Der Dichtkörper 26 ist im Ausführungsbeispiel als separates Bauteil ausgeführt; grundsätzlich kommt aber auch eine einteilige Ausführung mit dem Dichtungselement 3 in Betracht. Bezogen auf die Dicht- bzw. Kontaktfläche zwischen dem Dichtsteg 14 und der Dichtzunge 6 ist der Dichtkörper 26 in Richtung der Reinseite des Filtermediums 2 versetzt angeordnet. Zwischen der Dicht- bzw. Kontaktfläche zwischen dem Dichtsteg 14 und der Dichtzunge 6 und dem Dichtkörper 26, der sich im oben liegenden Bereich des Dichtungselementes 3 befindet, ist ein zusätzlicher Schmutzaufnahmeraum 27 gebildet, in welchem sich Schmutzteilchen 29 ansammeln können. Der Schmutzaufnahmeraum 27 stellt eine zusätzliche Sicherheit gegen einen versehentlichen Übertritt von Schmutzteilchen zur Reinseite der Filtereinrichtung dar.

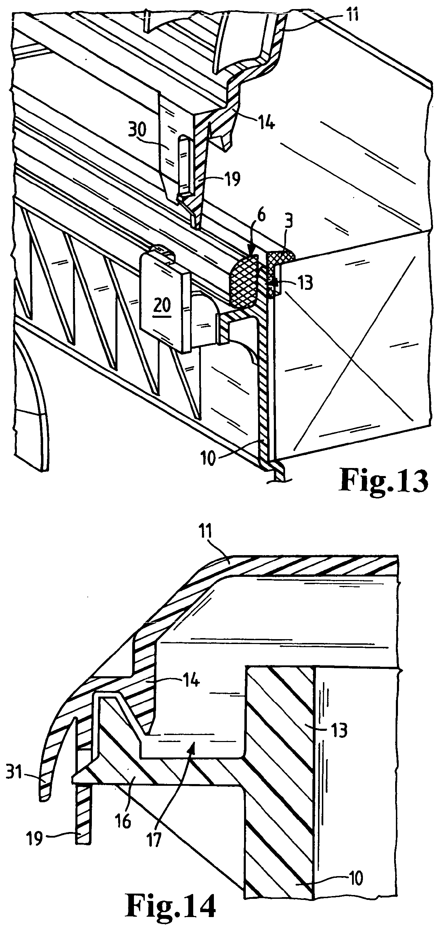

Auch im nicht erfindungsgemäßen Ausführungsbeispiel gemäß Fig. 13 erfährt die Dichtzunge 6 des Dichtungselementes 3 eine Radialkraft, welche von den Dichtstegen 13 und 14 am unteren bzw. oberen Gehäuseteil 10 bzw. 11 ausgeübt wird. Dies nicht erfindungsgemäße Ausführungsbeispiel zeigt darüber hinaus eine modifizierte Verbindungseinrichtung, die zum einen den Schnapphaken 19 umfasst, der einteilig mit dem oberen Gehäuseteil 11 ausgebildet ist und in eine Schnappverbindung mit dem Wandabschnitt 20 am unteren Gehäuseteil 10 zu verbringen ist. Zum andern umfasst die Verbindungseinrichtung einen Pin 30, der ebenfalls einteilig mit dem oberen Gehäuseteil ausgebildet ist und sich in unmittelbarer Nachbarschaft zum Schnapphaken 19 in Achsrichtung erstreckt. Der Pin 30 ragt in eine Ausnehmung ein, die von dem Wandabschnitt 20 am unteren Gehäuseteil 10 begrenzt ist. Über den Pin 30 wird ein Formschluss sowohl in Radialrichtung als auch in Umfangsrichtung erzielt, wohingegen über den Schnapphaken 19 ein Formschluss in Achsrichtung erreicht wird.

Auch das nicht erfindungsgemäßen Ausführungsbeispiel gemäß Fig. 14 eignet sich für eine radiale Verpressung eines in den Aufnahmeraum 17 eingeführten Dichtungselementes zwischen Dichtstegen 13 und 14 am unteren bzw. oberen Gehäuseteil. Der Schnapphaken 19 ist einteilig mit dem oberen Gehäuseteil 11 ausgebildet und weist eine Ausnehmung auf, in die ein Fortsatz einragt, der sich radial bzw. seitlich nach außen am einteilig mit dem unteren Gehäuseteil 10 ausgebildeten, sich horizontal erstreckenden Verbindungsabschnitt 16 befindet, wobei der Verbindungsabschnitt 16 zugleich den Boden des Aufnahmeraums 17 bildet. Den Schnapphaken 19 sowie den Fortsatz am horizontalen Verbindungsabschnitt 16 axial übergreifend ist einteilig mit dem oberen Gehäuseteil 11 eine Lasche 31 ausgebildet, die sich etwa parallel zum Schnapphaken 19 erstreckt und an der radialen Außenseite des Gehäuseteils angeordnet ist.

## Patentansprüche

1. Filtereinrichtung zur Filtration gasförmiger Fluide, insbesondere Luftfilter in Kraftfahrzeugen, mit einem Filtereinsatzteil (1 ), das ein Filtermedium (2) und ein Dichtungselement (3) umfasst, mit einem Filtergehäuse (9), in das das Filtereinsatzteil (1) einsetzbar ist, wobei das Filtergehäuse (9) zwei zusammenzusetzende Gehäuseteile (10, 11) umfasst und das Dichtungselement(3) zwischen Dichtstegen (13, 14) an den Gehäuseteilen(10,11) festgeklemmt ist, wobei die Dichtstege (13, 14) einander gegenüberliegend angeordnet sind, wobei die auf das Dichtungselement (3) wirkende Klemmkraft, welche von den gegenüberliegenden Dichtstegen (13, 14) erzeugbar ist, zumindest annähernd orthogonal zur Montagerichtung der Gehäuseteile(10,11) verläuft, wobei das Dichtungselement (3) in einen Aufnahmeraum (17) einragt, der auf der dem Filtermedium (2) zugewandten Seite von einem Dichtsteg (13) und auf der dem Filtermedium (2) abgewandten Seite von einem Stützsteg (15) begrenzt ist, wobei im montierten Zustand der zweite Dichtsteg (14) in den Aufnahmeraum (17) einragt und unmittelbar am Dichtungselement (3) anliegt,
**dadurch gekennzeichnet, dass**
der zweite Dichtsteg (14) parallel zum Stützsteg (15) liegt, wobei der Stützsteg (15) eine Gleitflache für den Dichtsteg (14) während der Montage bildet.

2. Filtereinrichtung nach Anspruch 1, **dadurch gekennzeichnet, dass** die Kontaktflächen an den Dichtstegen (13, 14), die das Dichtungselement (3) beaufschlagen, zueinander einen Winkel von maximal 30° einnehmen.

3. Filtereinrichtung nach Anspruch 1 oder 2, **dadurch gekennzeichnet, dass** die Kontaktflächen an den Dichtstegen (13, 14) zumindest annähernd parallel zueinander liegen.

4. Filtereinrichtung nach einem der Ansprüche 1 bis 3, **dadurch gekennzeichnet, dass** der dem Filtermedium (2) zugewandte Dichtsteg (13, 14) und der Stützsteg (15) einteilig ausgebildet sind.

5. Filtereinrichtung nach einem der Ansprüche 1 bis 4, **dadurch gekennzeichnet, dass** das Dichtungselement (3) den dem Filtermedium (2) zugewandten Dichtsteg (13) übergreift.

6. Filtereinrichtung nach einem der Ansprüche 1 bis 5, **dadurch gekennzeichnet, dass** das Dichtungselement (3) eine biegsame Dichtlippe aufweist, die im montierten Zustand über den dem Filtermedium (2) zugewandten Dichtsteg (13) gelegt ist.

7. Filtereinrichtung nach einem der Ansprüche 1 bis 6, **dadurch gekennzeichnet, dass** an einem Gehäuseteil (11) ein Anschlag (18) zur Begrenzung der Montagerichtung angeordnet ist, der in montierter Position in Anlage mit dem anderen Gehäuseteil (10) steht.

8. Filtereinrichtung zur Filtration gasförmiger Fluide, insbesondere nach einem der Ansprüche 1 bis 7, mit einem Filtereinsatzteil (1), das ein Filtermedium (2) und ein Dichtungselement (3) umfasst, mit einem Filtergehäuse (9), in das das Filtereinsatzteil (1) einsetzbar ist, wobei das Filtergehäuse (9) zwei zusammenzusetzende Gehäuseteile (10, 11) umfasst und das Dichtungselement (3) zwischen Dichtstegen (13, 14) an den Gehäuseteilen (10,11) festgeklemmt ist, **dadurch gekennzeichnet, dass** ein Dichtsteg (14) an einem Gehäuseteil (11) und ein Dicht- oder Stützsteg (15) am anderen Gehäuseteil (10) nach Art einer Nut-Feder-Verbindung formschlüssig ineinandergreifen, wobei der Dichtsteg (14) Teil einer U-förmigen Gehäusestruktur ist und der Dicht- oder Stützsteg (15) am anderen Gehäuseteil (10) in der U-förmigen Gehäusestruktur aufgenommen ist.

## Claims

1. Filtering device for filtering gaseous fluids, in particular air filter in motor vehicles, with a filter insert (1) comprising a filter medium (2) and a gasket element (3), with a filter housing (9) into which the filter insert (1) can be inserted, wherein the filter housing (9) comprises two housing components (10, 11) to be put together and the gasket element (3) is clamped between sealing webs (13, 14) at the housing components (10, 11), wherein the sealing webs (13, 14) are disposed opposite each other, wherein the clamping force produced by the opposing sealing webs (13, 14) and applied to the gasket element (3) extends at least approximately orthogonally to the mounting direction of the housing components (10, 11), wherein the gasket element (3) protrudes into a receiving space (17) which is limited on the side facing the filter medium (2) by a sealing web (13) and on the side facing away from the filter medium (2) by a supporting web (15), wherein in mounted state the second sealing web (14) protrudes into the receiving space (17) and contacts directly the gasket element (3), **characterized in that** the second sealing web (14) is located parallel to the supporting web (15), wherein the supporting web (15) forms a sliding surface for the sealing web (14) during mounting.

2. Filtering device according to claim 1, **characterized in that** the contact surfaces at the sealing webs (13, 14), which apply pressure on the gasket element (3), form an angle of maximal 30° to each other.

3. Filtering device according to claim 1 or 2, **characterized in that** the contact surfaces at the sealing webs (13, 14) are located at least approximately parallel to each other.

4. Filtering device according to one of the claims 1 to 3, **characterized in that** the sealing web (13, 14) facing the filter medium (2) and the supporting web (15) are designed as one piece.

5. Filtering device according to one of the claims 1 to 4, **characterized in that** the gasket element (3) overlaps the sealing web (13) facing the filter medium (2).

6. Filtering device according to one of the claims 1 to 5, **characterized in that** the gasket element (3) features a flexible sealing lip which overlaps, in mounted state, the sealing web (13) facing the filter medium (2).

7. Filtering device according to one of the claims 1 to 6, **characterized in that** a stop (18) is disposed at a housing component (11) for limiting the mounting direction and which is in abutment with the other housing component (10) in mounted position.

8. Filtering device for filtering gaseous fluids, in particular according to one of the claims 1 to 7, with a filter insert (1) comprising a filter medium (2) and a gasket element (3), with a filter housing (9) into which the filter insert (1) can be inserted, wherein the filter housing (9) comprises two housing components (10, 11) to be put together and the gasket element (3) is clamped between sealing webs (13, 14) at the housing components (10, 11), **characterized in that** a sealing web (14) at one housing component (11) and a sealing or supporting web (15) at the other housing component (10) engage positively with each other like a tongue and groove connection, wherein the sealing web (14) is part of a U-shaped housing structure and the sealing or supporting web (15) at the other housing component (10) is received in the U-shaped housing structure.

## Revendications

1. Dispositif de filtration pour la filtration de fluides gazeux, notamment filtre à air dans des véhicules automobiles, avec une cartouche filtrante (1) comprenant un milieu filtrant (2) et un élément d'étanchéité (3), avec un boîtier de filtre (9) dans lequel la cartouche filtrante (1) peut être insérée, le boîtier de filtre (9) comprenant deux parties de boîtier (10, 11) devant être assemblées et l'élément d'étanchéité (3) est serré entre des nervures d'étanchéité (13, 14) sur les parties de boîtier (10, 11), les nervures d'étanchéité (13, 14) étant disposées l'une en face de l'autre, la force de serrage agissant sur l'élément d'étanchéité (3), qui peut être générée par les nervures d'étanchéité (13, 14) opposées, s'étend au moins approximativement de manière orthogonale par rapport au sens de montage des parties de boîtier (10, 11), l'élément d'étanchéité (3) faisant saillie dans un espace de réception (17) qui est limité du côté orienté vers le milieu filtrant (2) par une nervure d'étanchéité (13) et du côté opposé au milieu filtrant (2) par une nervure d'appui (15), en état monté, la deuxième nervure d'étanchéité (14) faisant saillie dans l'espace de réception (17) et contacte directement l'élément d'étanchéité (3), **caractérisé en ce que** la deuxième nervure d'étanchéité (14) est placée parallèlement à la nervure d'appui (15), la nervure d'appui (15) formant une surface de glissement pour la nervure d'étanchéité (14) pendant le montage.

2. Dispositif de filtration selon la revendication 1, **caractérisé en ce que** les surfaces de contact forment un angle de 30° au maximum l'une par rapport à l'autre sur les nervures d'étanchéité (13, 14) qui appliquent une pression sur l'élément d'étanchéité (3).

3. Dispositif de filtration selon la revendication 1 ou 2, **caractérisé en ce que** les surfaces de contact sur les nervures d'étanchéité (13, 14) sont placées au moins approximativement parallèles l'une par rapport à l'autre.

4. Dispositif de filtration selon l'une des revendications 1 à 3, **caractérisé en ce que** la nervure d'étanchéité (13, 14) orientée vers le milieu filtrant (2) et la nervure d'appui (15) sont réalisées en un seul bloc.

5. Dispositif de filtration selon l'une des revendications 1 à 4, **caractérisé en ce que** l'élément d'étanchéité (3) chevauche la nervure d'étanchéité (13) orientée vers le milieu filtrant (2).

6. Dispositif de filtration selon l'une des revendications 1 à 5, **caractérisé en ce que** l'élément d'étanchéité (3) présente une lèvre d'étanchéité flexible qui est, en état monté, placée sur la nervure d'étanchéité (13) orientée vers le milieu filtrant (2).

7. Dispositif de filtration selon l'une des revendications 1 à 6, **caractérisé en ce qu'**une butée (18), qui est en appui en position montée avec l'autre partie de boîtier (10), est disposée sur une partie de boîtier (11).

8. Dispositif de filtration pour filtrer des fluides gazeux, notamment selon l'une des revendications 1 à 7, avec une cartouche filtrante (1) comprenant un milieu filtrant (2) et un élément d'étanchéité (3), avec un boîtier de filtre (9) dans lequel la cartouche filtrante (1) peut être insérée, le boîtier de filtre (9) comprenant deux parties de boîtier (10, 11)devant être assemblées et l'élément d'étanchéité (3) étant serré entre des nervures d'étanchéité (13, 14) sur les parties de boîtier (10, 11), **caractérisé en ce qu'**une nervure d'étanchéité (14) sur une partie de boîtier (11) et une nervure d'étanchéité ou une nervure d'appui (15) sur l'autre partie de boîtier (10) s'engrènent par engagement positif comme un assemblage par rainure et languette, la nervure d'étanchéité (14) faisant partie d'une structure de boîtier en forme de U et la nervure d'étanchéité ou la nervure d'appui (15) étant intégrée sur l'autre partie de boîtier (10) dans la structure de boîtier en forme de U.
